# EUROPEAN PATENT SPECIFICATION

(11) **EP 3 444 303 B1**
(45) Date of publication and mention of the grant of the patent: **22.07.2020**
(21) Application number: 17782668.2
(22) Date of filing: 12.04.2017
(51) Int. Cl.: C09C 1/64, C09C 1/62, C08K 5/3492, C08K 5/3412, C23C 2/06, C23C 2/40, C09D 175/04, C08K 3/22, C08K 5/42, C09D 175/06, C09D 17/00, C08K 3/04, C08K 5/00, C09D 5/08, C09D 7/61, C23C 2/26, C23C 28/00, C08G 101/00

(54) **HIGH QUALITY TEXTURED COMPOSITE RESIN COMPOSITION AND GALVANIZED STEEL SHEET COATED WITH COMPOSITE RESIN COMPOSITION**
HOCHQUALITATIVE TEXTURIERTE VERBUNDHARZZUSAMMENSETZUNG UND MIT DER VERBUNDHARZZUSAMMENSETZUNG BESCHICHTETES GALVANISIERTES STAHLBLECH
COMPOSITION DE RÉSINE COMPOSITE TEXTURÉE DE HAUTE QUALITÉ ET TÔLE D'ACIER GALVANISÉ REVÊTUE D'UNE COMPOSITION DE RÉSINE COMPOSITE

(30) Priority: 12.04.2016 KR 20160044696; 23.12.2016 KR 20160178224
(43) Date of publication of application: 20.02.2019
(73) Proprietor: Posco, Pohang-si, Gyeongsangbuk-do 37859 (KR)
(72) Inventor: JO, Du-Hwan, Pohang-si Gyeongsangbuk-do 37877 (KR); KANG, Choon-Ho, Pohang-si Gyeongsangbuk-do 37877 (KR)
(74) Representative: Zech, Stefan Markus
(86) International application number: PCT/KR2017/003974
(87) International publication number: WO 2017/179913

(56) References cited:
- GB-A- 2 399 520
- JP-A- H04 176 367
- JP-A- H08 100 150
- KR-A- 20040 065 937
- KR-A- 20090 027 043
- KR-A- 20140 014 817
- KR-B1- 100 618 469
- US-A1- 2005 142 297

## Description

### [Technical Field]

The present disclosure relates to a color composite resin-coated steel sheet having a high-quality color texture, high formability, and high chemical resistance so as to be used for panels of image display electronics, and a method of manufacturing the steel sheet.

### [Background Art]

Case tops, bottom chassis, and rear covers of image display electronics such as TVs have luxurious texture to induce consumers purchases, formability for press forming processes, and corrosion and chemical resistance for use for 10 or more years.

Thus, aluminum, injection-molded plastic products, or steel sheets having thick color coating layers have been used for such components. Thereamong, aluminum is lightweight and resistant to corrosion. However, external parts formed of aluminum generally have monotonous texture and are thus processed through a color coating process after a hairline process, thereby increasing manufacturing costs.

In addition, although injection-molded plastic products are widely used as panel materials because various designs are possible without limitations in formability, injection-molded plastic products are problematic in terms of productivity and eco-friendliness.

In addition, color coated steel sheets generally have a coating thickness of 30 mm or greater with a lower coating layer, a middle coating layer, and an upper coating layer. Therefore, although having luxurious appearance, the color coated steel sheets have low productivity and are expensive. KR 20090027043 describes a composition of wrinkle color texture paints and method for precoated metal steel by using the composition.
GB 2 339 520 A describes a method for forming a coated composite film by a three-coat one-bake method.
US 2005/0142297 A1 describes a thermosetting and photocurable coating composition and a method of forming the coating.

### [Disclosure]

### [Technical Problem]

Embodiments of the present disclosure provide a color composite resin composition having high-quality texture, high formability, and high chemical resistance while enabling removal of a middle coating layer from an existing color coated steel sheet for thickness reduction, a galvanized steel sheet coated with the composite resin composition, and a method of manufacturing the galvanized steel sheet.

In the present disclosure, an inorganic pigment and a micron-size metal pigment surface treated with an organic substance for providing a appealing texture while reducing a coating layer thickness are used for uniform floating in a coating layer and facilitating the action of an acid catalyst and an amine catalyst, thereby enabling the formation of a high-quality textured pattern.

Furthermore, in this manner, panels having beautiful appearance, beautiful texture, and high-quality properties such as corrosion resistance, chemical resistance, or press formability may be provided for image display electronics.

### [Technical Solution]

An aspect of the present disclosure may provide a composite resin composition. The composite resin composition includes: 30 wt% to 60 wt% of a urethane-modified polyester resin in which a linear type resin and a crosslinked type resin are mixed with each other; 3 wt% to 15 wt% of at least one of an aziridine curing agent and a melamine curing agent; 0.05 wt% to 1.5 wt% of an acid curing catalyst; 0.05 wt% to 1.5 wt% of an amine curing catalyst; 0.1 wt% to 15 wt% of a inorganic color pigment; and a solvent as a remainder, wherein the urethane-modified polyester resin has a weight ratio of the linear type resin and the crosslinked type resin within a range of 1:1 to 1:4, a weight-average molecular weight Mw within the range of 2,000 to 40,000, a glass transition temperature within the range of 0 to 70°C and a hydroxyl (-OH) value of 10 to 500.

The melamine curing agent may include methylated melamine and imino melamine with a weight ratio of 1:1 to 1:4.

The acid curing catalyst may include at least one sulfonic acid selected from the group consisting of p-toluenesulfonic acid, dodecyl benzene disulfonic acid, dinonyl toluene disulfonic acid, and dinonyl naphthalene sulfonic acid.

The acid curing catalyst may include a sulfonic acid blocked with an amine-based compound.

The sulfonic acid blocked with the amine-based compound may be an amine neutralized dodecylbenzenesulfonic acid.

The amine curing catalyst may include primary amine, secondary amine, tertiary amine, or a mixture of at least two thereof.

The amine curing catalyst may be more volatile than the acid curing catalyst.

The color composite resin composition may further include a metal pigment in an amount of 0.1 wt% to 15 wt% based on the total weight of the composite resin composition.

The viscosity of the composite resin composition is 20 seconds to 200 seconds of a time period may be required for discharging the composite resin composition from a DIN Cup (DIN, 53211).

Another aspect of the present disclosure provides a galvanized steel sheet including: a base steel sheet having a galvanized layer; and a composite resin coating layer formed on at least one side of the base steel sheet, wherein the composite resin coating layer is a color composite resin coating layer including: 50 wt% to 80 wt% of a urethane-modified polyester resin in which a linear type resin and a crosslinked type resin are mixed with each other, 3 wt% to 20 wt% of at least one of an aziridine curing agent and a melamine curing agent, and 3 wt% to 20 wt% of a inorganic color pigment, wherein the urethane-modified polyester resin has a weight ratio of the linear type resin and the crosslinked type resin within a range of 1:1 to 1:4, a weight-average molecular weight Mw within the range of 2,000 to 40,000, a glass transition temperature within the range of 0 to 70°C and a hydroxyl (-OH) value of 10 to 500.

The inorganic color pigment may have a particle diameter of 0.01 µm to 20 µm and an oil absorption of 60% or less.

The color composite resin coating layer may further include a metal pigment in an amount of 0.5 wt% to 20 wt% based on the total weight of the color composite resin coating layer.

The metal pigment may have a flake shape with a thickness of 0.1 µm to 5 µm.

The metal pigment may be surface treated with at least one organic compound selected from the group consisting of cetyl sulfate sodium salt, cetyl sulfate ammonium salt, stearyl sulfate sodium salt, stearyl sulfate ammonium salt, glycerin fatty acid ester, polyglycerin fatty acid ester, glyceryl ricinoleate, glyceryl stearate, glyceryl rosinate, Laneth-5, Laneth-10, Laneth-15, lanolin, laurtrimonium chloride, cetrimonium bromide, cetrimonium chloride, sodium isostearoyl lactate, sorbitan laurate, sorbitan stearate, sorbitan oleate, and organic compounds having chemical formulas 1 to 5 below: 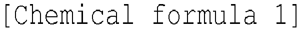 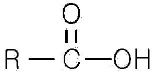 in chemical formula 1, R refers to a C5-C15 chain alkyl compound,

[Chemical formula 2] RO(CH₂CH₂O)nSO₃H

in chemical formula 2, R refers to a C1-C10 chain alkyl compound, and n refers to an integer ranging from 1 to 10, 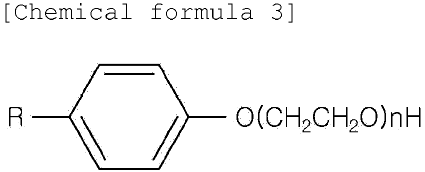 in chemical formula 3, R refers to a C1-C10 chain alkyl compound, and n refers to an integer ranging from 1 to 10,

[Chemical formula 4] RCO(CH₂CH₂O) nH

in chemical formula 4, R refers to a C1-C10 chain alkyl compound, and n refers to an integer ranging from 1 to 10, and 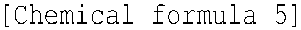 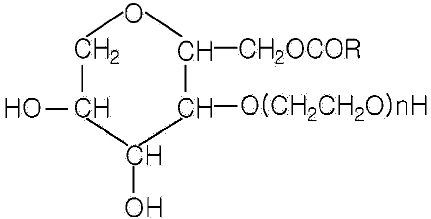 in chemical formula 5, R refers to a C1-C10 chain alkyl compound, and n refers to an integer ranging from 1 to 10.

The galvanized steel sheet may further include a transparent resin coating layer on the composite resin coating layer. The transparent resin coating layer may include 65 wt% to 95 wt% of a urethane-modified polyester resin in which a linear type resin and a crosslinked type resin are mixed with each other, and 5 wt% to 35 wt% of at least one of an aziridine curing agent and a melamine curing agent.

### [Advantageous Effects]

According to an embodiment of the present disclosure, the galvanized steel sheet coated with the color composite resin has high-quality exterior texture owing to metallic surface texture and a pattern formed on the coating layer.

In addition, according to an embodiment of the present disclosure, a very-thin transparent paint may be formed, by a roll coating method or a spray coating method, on the steel sheet coated with the color composite resin, thereby implementing a color coating layer having beautiful texture.

In addition, according to an embodiment of the present disclosure, the steel sheet coated with the color composite resin may have improved press formability and chemical resistance and may thus be used for panels of image display electronics.

### [Description of Drawings]

FIG. 1 is a graph illustrating the composition ratio of a color metal pigment and inorganic color pigments.
FIGS. 2A to 2D are cross-sectional views schematically illustrating a layer structure of a composite resin-coated galvanized steel sheet having a composite resin coating layer according to an embodiment of the present disclosure.
FIG. 3 is a schematic view illustrating a process of manufacturing a coated galvanized steel sheet using a composite resin composition according to an embodiment of the present disclosure.

### [Best Mode]

Embodiments of the present disclosure will now be described in detail.

The present disclosure provides a color composite resin composition including a transparent resin composition together with an inorganic pigment and a metal pigment, wherein the transparent resin composition contains a urethane-modified polyester in which a linear type resin and a crosslinked type resin are mixed with each other at a preset ratio, an aziridine curing agent or a melamine curing agent, an acid catalyst, an amine catalyst, and a solvent. When a binder resin of such a resin composition is cured, a pattern may be continuously formed on a surface of a coating layer owing to the curing rate difference between the inside of the coating layer and the surface of the coating layer.

To this end, the composite resin composition of the present disclosure includes, based on the total weight thereof, 30 wt% to 60 wt% of a urethane-modified polyester resin, 3 wt% to 15% of an aziridine curing agent or a melamine curing agent, 0.05 wt% to 1.5 wt% of an acid catalyst, 0.05 wt% to 1.5 wt% of an amine curing catalyst, 0.1 wt% to 15 wt% of a inorganic color pigment, and a solvent as a remainder. In addition, the resin composition of the present disclosure may further include a metal pigment.

Hereinafter, the resin composition of the present disclosure will be described in more detail.

### <Binder resin>

In the present disclosure, a urethane-modified polyester resin is used as a binder resin. In the present disclosure, the urethane-modified polyester resin may form a fine pattern on a coating layer during a curing process and has high formability and chemical resistance.

The urethane-modified polyester resin has a weight-average molecular weight Mw within the range of 2,000 to 40,000. For example, the weight-average molecular weight may be within the range of 2,000 to 30,000, 2,000 to 25,000, 3,000 to 40,000, 5,000 to 40,000, 3,000 to 30,000, 5,000 to 30,000, or 5,000 to 25,000. If the weight-average molecular weight is less than 2,000, the coating layer may have insufficient chemical resistance and formability, and if the weight-average molecular weight is greater than 40,000, the storage stability and workability of a solution may deteriorate.

The binder resin may be a urethane-modified polyester resin in which a linear type resin and a crosslinked type resin are mixed with each other. If the urethane-modified polyester resin in which a linear type resin and a crosslinked type resin are mixed with each other is used as the binder resin, formability may be improved, and a pattern may be more easily formed owing to the characteristics of a functional group during reaction with the acid catalyst and the amine catalyst. More preferably, the urethane-modified polyester resin has a glass transition temperature within the range of 0 to 70°C.

In the urethane-modified polyester resin, a linear structure and a crosslinked structure is mixed with each other at a weight ratio ranging from 1:1 to 1:4, and preferably from 1:1 to 1:3. When a linear structure resin and a crosslinked structure resin are mixed with each other at the weight ratio, the coating layer may have desired formability and properties and may be densely and firmly cured.

In addition, the urethane-modified polyester resin has a hydroxyl (-OH) value of 10 to 500, and preferably 20 to 400. If the hydroxyl value is greater than 500, the chemical resistance of the coating layer deteriorates, and if the hydroxyl value is less than 10, the crosslinking of the coating layer deteriorates.

In addition, the urethane-modified polyester resin may have an acid value of 5 mgKOH/g to 30 mgKOH/g, and preferably 10 mgKOH/g to 25 mgKOH/g. If the acid value is greater than 30 mgKOH/g, the chemical resistance of the coating layer deteriorates, and if the acid value is less than 10 mgKOH/g, the crosslinking of the coating layer deteriorates.

The urethane-modified polyester resin is included in an amount of 30 wt% to 60 wt% based on the total weight of the composite resin composition. If the amount of the urethane-modified polyester resin is outside of the range, the dryability of the coating layer may decrease during a curing process, and other properties of the coating layer may deteriorate.

### <Curing agent>

The composite resin composition of the present disclosure includes a curing agent for curing the binder resin, and the curing agent may be an aziridine curing agent or a melamine curing agent. The curing agent is not limited to a particular type as long as the curing agent has high reactivity. Examples of the curing agent may include an aziridine curing agent and a melamine curing agent having the following structural formulas.

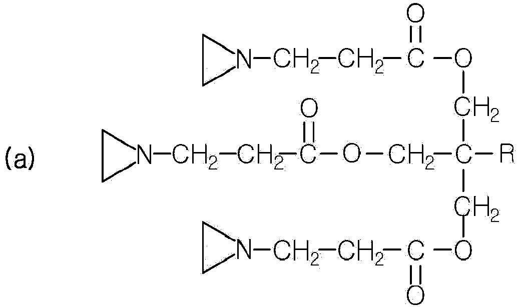

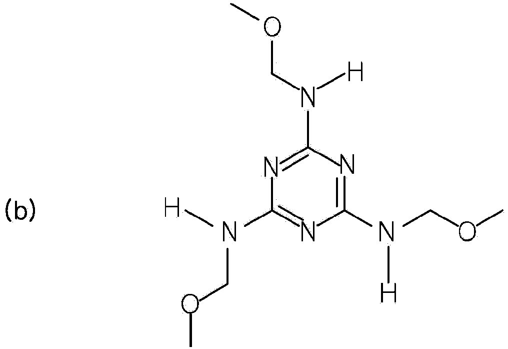

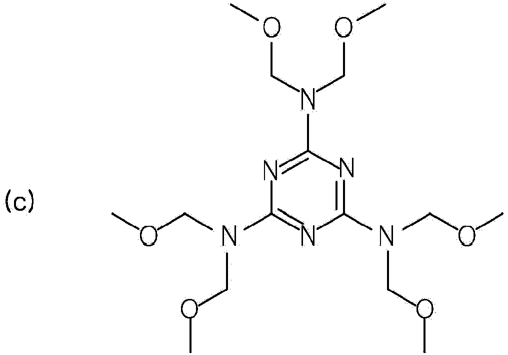

Structural formula (a) refers to an aziridine curing agent, and R in the structural formula (a) is H, -CH₃,-CH₂CH₃, -CH₂CH₂CH₃, -CH₂OH, or -CH₂CH₂OH. Only an aziridine curing agent may be used, or a mixture of two or more aziridine curing agents may be used.

In addition, imino melamine having structural formula (b) or methylated melamine having structural formula (c) may be used as the melamine curing agent. Compared to methylated melamine, imino melamine leads to a fast curing rate and thus facilitates high-speed curing, and if the content of imino melamine increases, the degree of curing increases to result in an increase in the hardness of the coating layer. In addition, fully methylated melamine leads to a relatively low curing rate, but improves the smoothness of the coating layer and guarantees high surface quality. Therefore, methylated melamine may be used to improve the surface quality of the coating layer, and imino melamine leading to a high reaction rate may be added to increase the reaction rate. Preferably, the imino melamine having structural formula (b) and the methylated melamine having structural formula (c) may be mixed with each other at a weight ratio of 1:1 to 1:4 and may be used as the curing agent.

Examples of the methylated melamine include butoxymethyl melamine and hexamethoxymethyl melamine, and examples of the imino melamine include trimethoxymethyl melamine. Examples of a melamine product usable in the present disclosure include CYMEL-303, CYMEL-325, CYMEL-327, CYMEL-350, and CYMEL-370 by CYTEC; RESIMINE-7550, RESIMINE-717, RESIMINE-730, RESIMINE-747, and RESIMINE-797 by SOLUTIA; and BE-3717, BE-370, and BE-3747 by BIP.

The melamine curing agent may be included in the composite resin composition in an amount of 3 wt% to 15 wt%. When the resin and the melamine curing agent are mixed with each other at the ratio, desired properties of the coating layer may be obtained, and the coating layer may have a dense structure after curing.

### <Acid catalyst and amine catalyst>

The composite resin composition of the present disclosure includes an acid catalyst and an amine catalyst as curing accelerators to facilitate a curing reaction between the urethane-modified polyester resin being a binder and aziridine or melamine molecules being a curing agent and thus to improve the hardness of the coating layer.

In this case, the amine catalyst may be more volatile than the acid catalyst. Due to the catalysts, a curing rate difference may occur between the inside and surface of the coating layer during curing, and thus concave and convex portions may be formed as a pattern on the surface of the coating layer. If a pattern is formed on the surface of the coating layer as described above, the surface texture of the coating layer may be improved by the extinction effect.

The acid catalyst may be a sulfonic acid. Examples of the sulfonic acid include p-toluenesulfonic acid, dodecyl benzene disulfonic acid, dinonyl toluene disulfonic acid, and dinonyl naphthalene sulfonic acid. One of or a combination of the listed acids may be used.

The sulfonic acid catalyst may be blocked with organic chains which undergo dissociation under the influence of heat. Examples of such a blocking substance may include an amine-based compound. For example, such a sulfonic acid blocked with organic chains may be an amine neutralized dodecylbenzenesulfonic acid.

The acid catalyst is included in an amount of 0.05 to 1.5 parts by weight based on 100 parts by weight of the resin composition. If the content of the acid catalyst is too low, the curing temperature of the coating layer increases, and properties of the coating layer may not be maintained. Conversely, if the content of the acid catalyst is excessively high, curing of the coating layer may occur too fast, or the storage stability of a solution may deteriorate.

In addition, the amine-based catalyst may be primary amine (NH₂-R₁), secondary amine (NH-R₁, -R₂), or tertiary amine (N-R₁, -R₂, -R₃) having hydrocarbons as substituents. Here, the hydrocarbons R₁, R₂, and R₃ may be aromatic or aliphatic chains. Examples of the amine-based catalyst usable in the present disclosure may include diethylamine, diisopropylamine, diisopropanolamine, di-n-propylamine, di-n-butylamine, diisobutylamine, di-sec-butylamine, diallylamine, diamylamine, N-ethyl-1,2-dimethylpropylamine, N-methylhexylamine, di-n-octylamine, piperidine, 2-pipecoline, 3-pipecoline, 4-pipecoline, and morpholine. One of the listed substances or a combination of at least two of the listed substances may be used.

The amine-based catalyst is included in the composite resin composition in an amount of 0.05 wt% to 1.5 wt%. If the content of the amine catalyst is too low, the curing temperature of the coating layer increases, and properties of the coating layer may not be maintained. Conversely, if the content of the amine catalyst is excessively high, curing of the coating layer may occur too fast, or the storage stability of a solution may deteriorate.

### <Inorganic color pigment>

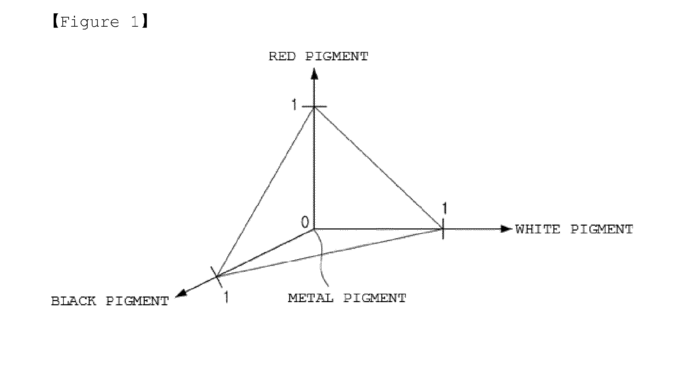

In the present disclosure, an inorganic pigment is added to the composite resin composition to color the composite resin composition. The inorganic pigment may be any inorganic pigment having its own color. However, a combination of black, red, and white pigments may be used to implement various colors by mixing the pigments at a preset ratio as shown in FIG. 1.

Preferably, the inorganic pigment is included in an amount of 0.1 wt% to 15 wt%. If the content of the inorganic pigment is less than 0.1 wt%, it is difficult to provide a high degree of hiding and an attractive color to a base steel sheet. If the content of the inorganic pigment is greater than 15 wt%, the viscosity of a solution increases to cause poor workability, and it is difficult to obtain an attractive appearance.

Examples of the black pigment include carbon black, carbon nanotubes, graphite, and graphene, and carbon black may be used. Examples of a carbon black pigment include Nerox™ series, Printex™ series, and Highblack™ series by Evonik, Germany. The average particle diameter of the carbon black pigment may be within the range of about 10 nm to about 100 nm, and preferably within the range of about 10 nm to about 30 nm in terms of the dispersion of the carbon black pigment.

In addition, the red inorganic pigment may be ferric oxide (Fe₂O₃). Iron oxides are nontoxic and chemically stable and may have various colors. In addition, examples of a yellow inorganic pigment include antimony, and examples of the white inorganic pigment include titanium dioxide (TiO₂) and zinc oxide (ZnO).

The inorganic pigment may have low oil absorption. The oil absorption of the inorganic pigment may be within the range of 60% or less, and preferably within the range of 5% to 50%. If the oil absorption of the inorganic pigment is excessively high, workability deteriorates, and it is difficult to obtain a pattern. Therefore, the oil absorption of the inorganic pigment may be within the above-mentioned range.

In addition, the inorganic color pigment may have a small average particle size (diameter) so as to form the coating layer to a thin thickness. For example, the inorganic color pigment may have an average particle size within the range of 0.1 µm to 20 µm. In particular, if pigment particles are continuously arranged on a pattern formed on the coating layer, the hardness of the coating layer may increase, and the texture of the coating layer may be improved, thereby providing better decorative effects. Therefore, the average particle size of the inorganic pigment may preferably be within the range of a dried thickness of a color coating composite resin composition ± 5 µm. For example, the average particle size of the inorganic pigment may be within the range of 5 µm to 15 µm.

### <Metal pigment>

The composite resin composition may further include a metal pigment to provide metallic texture. In this case, the metal pigment may be included in an amount of 0.1 to 20.0 parts by weight based on the total weight of the composite resin composition.

In the present disclosure, the metal pigment may be any metal in the periodic table as long as the metal pigment has a micron size. Examples of the metal pigment may include Ag, Al, Co, Cu, Fe, Mg, Mn, Mo, Ni, Pd, Pt, Sn, W, Zn, and an alloy thereof.

In addition, according to the present disclosure, the metal pigment may have various shapes such as a granular shape, a plate shape, a lump shape, or a flake shape. However, in the case in which the metal pigment is used as paint, the metal pigment may have a flake shape to impart high-quality metallic texture and brightness to the coating layer. If the metal pigment has a flake shape, the metal pigment may have a thickness of 0.1 µm to 5 µm so as to improve the appearance of the coating layer.

The metal pigment may be an aluminum pigment having a high gloss and a relative low specific gravity for floating easily to the surface of the coating layer. In this case, the aluminum pigment may be aluminum or an alloy of aluminum and another metal. If an aluminum alloy pigment is used, the content of aluminum in the aluminum alloy pigment is not particularly limited.

In the present disclosure, the aluminum pigment may have an average particle size of 30 µm or less. If the average particle size of the aluminum pigment is greater than 30 µm, high-quality texture may not be obtained due to a rough surface of the coating layer. Thus, it may be preferable that the aluminum pigment have an average particle size within the above-mentioned range. In this case, the average particle size of the aluminum pigment does not have a particular lower limit, but may be preferably within the range of 0.1 µm or greater in terms of manufacturing and economic aspects, and more preferably within the range of 1 µm or greater when the cohesion and dispersion of the aluminum pigment are further considered.

In addition, the resin composition of the present disclosure may include a ceramic pigment such as glass, mica, alumina, or titania. The ceramic pigment may be plated with a metal to form a metal coating layer thereon to thus provide metallic texture.

The metal pigment may be surface treated with an organic compound. If the metal pigment is surface treated with an organic compound, the generation of gas may be suppressed owing to improvements in chemical stability, agglomeration of solid contents may be prevented when the resin composition of the present disclosure is manufactured and stored, and floating and dispersion of the metal pigment in the coating layer may be improved when a coated steel sheet is manufactured.

In this case, the following organic compounds may be used for surface treatment of the metal pigment.

A higher fatty acid alkali salt or ammonium salt having chemical formula 1 below, or a mixture thereof may be used. 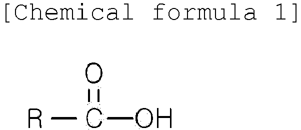 (where R refers to a C5-C15 chain alkyl compound).

Examples of the compound may include sodium or ammonium stearate, and sodium or ammonium oleate.

In addition, alkyl sulfate salt may be used. Examples of the compound include sodium or ammonium salt of cetyl sulfate and stearyl sulfate.

In addition, alkyl ether sulfate salt having chemical formula 2 below may be used.

[Chemical formula 2] RO(CH₂CH₂O)nSO₃H

(where R refers to a C1-C10 chain alkyl compound, and n refers to an integer ranging from 1 to 10).

Next, sodium or ammonium salt of alkylphenol ethoxylate may be used. 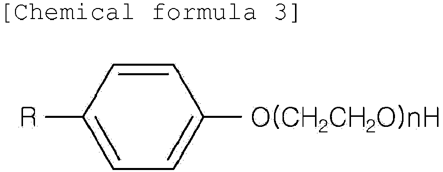 (where R refers to a C1-C10 chain alkyl compound, and n refers to an integer ranging from 1 to 10).

In addition, polyoxyethylene fatty acid ester having chemical formula 4 below may be used.

[Chemical formula 4] RCO(CH₂CH₂O)nH

(where R refers to a C1-C10 chain alkyl compound, and n refers to an integer ranging from 1 to 10).

In addition, polyoxyethylene sorbitan fatty acid ester having chemical formula 5 below may be used. 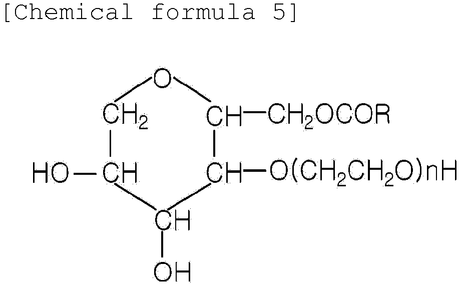 (where R refers to a C1-C10 chain alkyl compound, and n refers to an integer ranging from 1 to 10).

In addition, glycerin fatty acid ester, polyglycerin fatty acid ester, glyceryl ricinoleate, glyceryl stearate, glyceryl rosinate, Laneth-5, Laneth-10, Laneth-15, lanolin, laurtrimonium chloride, cetrimonium bromide, cetrimonium chloride, sodium isostearoyl lactate, sorbitan laurate, sorbitan stearate, sorbitan oleate, or a mixture thereof may be used.

The composite resin composition of the present disclosure may be prepared by mixing the urethane-modified polyester resin in which a linear type resin and a crosslinked type resin are included at a preset ratio with the aziridine curing agent or the melamine curing agent, the acid catalyst, and the amine catalyst, dispersing the mixture in a solvent to form the composite resin composition, and mixing the inorganic color pigment with the composite resin composition. In addition, after the inorganic color pigment is mixed with the composite resin composition, the mixture of the inorganic color pigment and the composite resin composition may be dispersed in a solvent. In addition, the metal pigment may be additionally mixed with the composite resin composition for implementing a metallic texture color.

In addition to the above-described components, at least one additive such as wax, a curing catalyst, a pigment agglomeration inhibitor, an antifoaming agent, or a leveling agent may be additionally added to the resin composition of the present disclosure so as to improve the properties of the coating layer. Such optional additives used in the present disclosure may be any commonly used additives and may be mixed at a common ratio.

The remainder of the resin composition, other than the above-described components, is a solvent, and examples of the solvent may include toluene, xylene, isopropanol, solvent naphtha, cellosolve, cellosolve acetate, and butyl cellosolve. One or a mixture of at least two of the listed materials may be used as the solvent.

Although the viscosity of the composite resin composition may vary with the content of the solvent, the content of the solvent may be adjusted according to conditions. For example, the content of the solvent may be adjusted by considering the coating amount and adhesion of the resin composition, for example, to a value such that it may take about 20 seconds to about 200 seconds to discharge the resin composition from a DIN cup (DIN, 53211).

The resin composition of the present disclosure is proposed to provide a coating layer having high formability and chemical resistance. That is, a coating layer is formed by mixing an inorganic pigment and a metal with linear and crosslinked urethane-modified polyester resins to form a complex net structure having high press formability and hardness.

The present disclosure provides a steel sheet on which a coating layer is formed of the composite resin composition. The steel sheet may be provided by applying the color resin composition to at least one of first and second sides of a base steel sheet. That is, the composite resin composition may only be applied to the first side or the second side of the base steel sheet, or both of the first and second sides of the base steel sheet, so as to form a color composite resin coating layer, and in some cases, a transparent resin coating layer may be formed on the color composite resin coating layer.

The base steel sheet may be a galvanized steel sheet. Examples of the galvanized steel sheet include a hot-dip galvanized (GI) steel sheet, a hot-dip galvannealed (GA) steel sheet, an electro-galvanized (EG) steel sheet, an aluminum-plated steel sheet, and Zn-Al-Mg alloy-plated steel sheet.

The color composite resin coating layer is formed on the base steel sheet using the color resin composition, and thus includes the urethane-modified polyester resin in which a linear type resin and a crosslinked type resin are mixed with each other, at least one of the aziridine curing agent and the melamine curing agent, and the inorganic color pigment. According to the present disclosure, the coating layer includes 50 wt% to 80 wt% of the urethane-modified polyester resin in which a linear type resin and a crosslinked type resin are mixed with each other, 3 wt% to 20 wt% of at least one of the aziridine curing agent and the melamine curing agent, and 3 wt% to 20 wt% of the inorganic color pigment.

The solvent included in the composition is removed from the steel sheet through a drying process. In addition, the acid curing catalyst and the amine curing catalyst are also removed from the steel sheet by evaporation, but may remain in very small amounts.

Furthermore, in the case in which the composition for forming the coating layer further includes the metal pigment, the metal pigment may remain in the coating layer in an amount of 0.5 wt% to 20 wt% based on the total weight of the coating layer.

After being dried, the color composition resin coating layer may have a thickness of 3 µm to 30 µm, preferably 5 µm to 25 µm, and more preferably 5 µm to 20 µm. If the dried thickness of the color composite resin coating layer is less than 3 µm, the color composite resin coating layer has a poor color hiding ability, formability, and solvent resistance, and if the dried thickness of the color composite resin coating layer is greater than 30 µm, high manufacturing costs and low productivity are resulted.

A transparent resin coating layer may be formed on the color composite resin coating layer. The transparent resin coating layer may be formed of the same composite as the composition used to form the color composite resin coating layer except that the composition does not include the inorganic pigment and the metal pigment providing colors. The transparent resin coating layer formed as described above may include 65 wt% to 95 wt% of the urethane-modified polyester resin in which a linear type resin and a crosslinked type resin are mixed with each other, and 5 wt% to 35 wt% of at least one of the aziridine curing agent and the melamine curing agent.

The transparent resin coating layer may have a dried thickness of 0.1 µm to 3 µm, preferably 0.3 µm to 2 µm, and more preferably 0.5 µm to 1.5 µm. If the dried thickness of the transparent resin coating layer is less than 0.1 µm, additional improvements in color and texture are not obtained, and if the dried thickness of the transparent resin coating layer is greater than 3 µm, improvements in color and texture are not great compared to an increase in the dried thickness of the transparent resin coating layer.

The color composite resin composition and the transparent resin composition may be applied to the first side and/or the second side of the base steel sheet by a general resin coating method such as a bar-coater method, a roll-coater method, a slot-die method, or a curtain-coater method. In addition, the color composite resin composition may be applied by one of the listed methods, and the transparent resin composition may be applied by another of the listed methods or a spray coating method.

In addition, after coating, the color composite resin composition and the transparent resin composition may be dried by any method generally known in the related art. The drying may be performed by a hot-air heating method, an infrared heating method, or an induction heating method.

Preferably, the color composite resin composition and the transparent resin composition may be dried at a peak metal temperature (PMT) of 180 to 260°C. In an example, the compositions may be dried according to a hot-air heating method by blowing a hot air at an ambient temperature of 200 to 340°C for 10 second to 50 seconds. In the case of an induction heating method, the compositions may be dried within a frequency range of 5 MHz to 50 MHz and a power range of 3 KW to 15 KW for a time period of 5 seconds to 20 seconds.

In other embodiments of the present disclosure, the composite resin coating layer may be formed on only one side of the base steel sheet, and in this case, the other side of the base steel sheet on which the composite resin coating layer is not formed may be coated with a resin coating layer by considering the formability and corrosion resistance of the steel sheet.

According to an embodiment of the present disclosure, a steel sheet having improved formability may be provided by forming lower coating layers on both sides of a base steel sheet, and then forming a color composite resin coating layer on one of the lower coating layers according to the above-described embodiments. In the case of a steel sheet having a color composite resin coating layer (upper coating layer), a lower coating layer may be located between a base steel sheet and the color composite resin coating layer (upper coating layer).

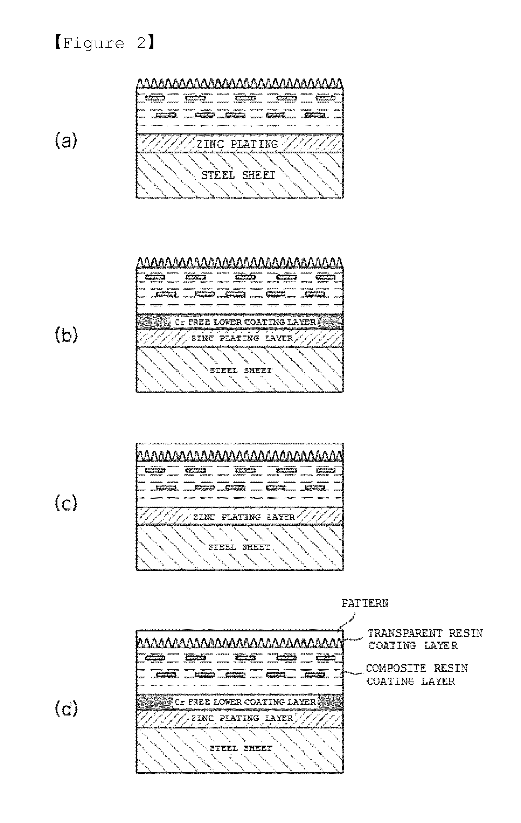

FIGS. 2A to 2D are side cross sectional views illustrating a steel sheet coated with a color composite resin composition. Referring to FIG. 2A, a composite resin coating layer may be formed on a galvanized steel sheet. In this case, the composite resin coating layer may be formed by applying the composite resin composition to a Cr-free lower coating layer formed on the galvanized steel sheet as shown in FIG. 2B. In addition, as shown in FIG. 2C, a transparent resin coating layer may be formed on the composite resin coating layer. In addition, as shown in FIG. 2D, the composite resin coating layer may be formed by applying the composite resin composition to the lower coating layer, and the transparent resin coating layer may be formed on the composite resin coating layer.

In the embodiment of the present disclosure, the lower coating layer additionally formed on the first side and/or the second side of the base steel sheet may be any coating layer known in the related art as a coating layer applicable between a base steel sheet and a color composite resin coating layer (upper coating layer) for improving adhesion between the base steel sheet and the color composite resin coating layer and imparting required physical properties such as coatability and corrosion resistance to the steel sheet.

If the composite resin coating layer is formed on the Cr-free lower coating layer or the transparent resin coating layer is formed on the color composite resin coating layer, the base steel sheet may be more effectively hidden because the lower coating layer or the transparent resin coating layer increases the total layer thickness, and a more beautiful color may be provided because diffuse reflection of light decreases.

### [Mode for Invention]

Hereinafter, the present disclosure will be described more specifically according to examples.

### Examples 1 and 12, and Comparative Examples 1 to 11

As illustrated in Table 1 below, 100 parts by weight of a transparent resin composition was prepared by mixing a urethane-modified polyester resin, a curing agent, an acid catalyst, and an amine catalyst, and adding the mixture to a solvent. The transparent resin composition includes the solvent as a remainder.

Next, the urethane-modified polyester resin, the curing agent, the acid catalyst, the amine catalyst, an inorganic pigment, and a metal pigment were further added in amounts as in Embodiments 1 to 12 and Comparative Examples 1 to 11 shown in Table 1, and the mixture was added to the solvent and dispersed using a high-speed bead mill. In this manner, color composite resin compositions were prepared.

The urethane-modified polyester resin was prepared by mixing a crosslinked resin having a weight-average molecular weight of 16000 (by KCC Corporation, Tg=10) with a linear resin having a weight-average molecular weight of 20,000 (by KCC Corporation, Tg=60) at a weight ratio of 2:1.

The curing agent was prepared by mixing hexamethoxymethyl melamine which is imino melamine with butoxymethyl melamine which is methylated melamine at a weight ratio of 1:3. In addition, an aziridine curing agent used in Example 1 had the structural formula (a) with R =-CH₃.

The acid catalyst was an amine neutralized dodecylbenzenesulfonic acid (pH= 6 to 7, activity=25%, by King Industries of USA).

The amine-based catalyst was dinonyl naphthalene sulfonic acid (DNNSA).

The solvent was cellosolve acetate.

A black pigment (carbon black, Printex™ series by Evonik), a red pigment (ferric oxide), and a white pigment (titanium dioxide) were used as color pigments.

**[Table 1]**

| No. (unit: wt%) | | Urethane-modified polyester resin | | Curing agents | | | Acid catalyst | Amine catalyst | Inorganic pigments | | | Metal pigment |
|---|---|---|---|---|---|---|---|---|---|---|---|---|
| | | linear | crosslinked | aziridine | methylated melamine | imino melamine | | | black | red | while | |
| Transparent resin composition | | 20 | 40 | 0 | 2.5 | 7.5 | 0.08 | 0.08 | 0 | 0 | 0 | 0 |
| Examples | 1 | 20 | 40 | 10 | 0 | 0 | 0.08 | 0.08 | 3 | 2 | 2 | 0 |
| | 2 | 20 | 40 | 0 | 2.5 | 7.5 | 0.08 | 0.08 | 3 | 2 | 2 | 0 |
| | 3 | 20 | 40 | 0 | 2.5 | 7.5 | 0.08 | 0.08 | 3 | 2 | 2 | 3 |
| | 4 | 20 | 40 | 0 | 2.5 | 7.5 | 0.08 | 0.08 | 7 | 0 | 0 | 0 |
| | 5 | 20 | 40 | 0 | 2.5 | 7.5 | 0.08 | 0.08 | 0 | 7 | 0 | 0 |
| | 6 | 20 | 40 | 0 | 2.5 | 7.5 | 0.08 | 0.08 | 0 | 0 | 7 | 0 |
| | 7 | 30 | 30 | 0 | 2.5 | 7.5 | 0.08 | 0.08 | 3 | 2 | 2 | 0 |
| | 8 | 15 | 45 | 0 | 2.5 | 7.5 | 0.08 | 0.08 | 3 | 2 | 2 | 0 |
| | 9 | 20 | 40 | 0 | 5 | 5 | 0.08 | 0.08 | 3 | 2 | 2 | 0 |
| | 10 | 20 | 40 | 0 | 3.3 | 6.7 | 0.08 | 0.08 | 3 | 2 | 2 | 0 |
| | 11 | 20 | 40 | 0 | 2.5 | 7.5 | 0.05 | 0.05 | 3 | 2 | 2 | 0 |
| | 12 | 20 | 40 | 0 | 2.5 | 7.5 | 1.5 | 1.5 | 3 | 2 | 2 | 0 |
| Comparative Examples | 1 | 60 | 0 | 0 | 2.5 | 7.5 | 0.08 | 0.08 | 3 | 2 | 2 | 0 |
| | 2 | 0 | 60 | 0 | 2.5 | 7.5 | 0.08 | 0.08 | 3 | 2 | 2 | 0 |
| | 3 | 20 | 40 | 0 | 10 | 0 | 0.08 | 0.08 | 3 | 2 | 2 | 0 |
| | 4 | 20 | 40 | 0 | 0 | 10 | 0.08 | 0.08 | 3 | 2 | 2 | 0 |
| | 5 | 20 | 40 | 0 | 2.5 | 7.5 | 0 | 0 | 3 | 2 | 2 | 0 |
| | 6 | 10 | 50 | 0 | 2.5 | 7.5 | 0.08 | 0.08 | 3 | 2 | 2 | 0 |
| | 7 | 40 | 20 | 0 | 2.5 | 7.5 | 0.08 | 0.08 | 3 | 2 | 2 | 0 |
| | 8 | 20 | 40 | 0 | 6 | 4 | 0.08 | 0.08 | 3 | 2 | 2 | 0 |
| | 9 | 20 | 40 | 0 | 1 | 9 | 0.08 | 0.08 | 3 | 2 | 2 | 0 |
| | 10 | 20 | 40 | 0 | 2.5 | 7.5 | 0.03 | 0.03 | 3 | 2 | 2 | 0 |
| | 11 | 20 | 40 | 0 | 2.5 | 7.5 | 1.7 | 1.7 | 3 | 2 | 2 | 0 |

As shown in Table 2, electrogalvanized steel sheets (Inventive Materials 1, 4, 5, 6, 9, 10, 11 and 14 to 22) having electrogalvanized layers with a plating weight of 20 g/m² on one side, or electrogalvanized steel sheets (Inventive Materials 2, 3, 7, 8, 12, and 13) further having Cr-free lower coating layers with a dried thickness of 1 µm were roll coated with solutions prepared as described above, that is, composite resin compositions of Examples 1 to 12 and Comparative Examples 1 to 11 to obtain a dried coating layer thickness of 5 µm to 15 µm; and coating layers were cured and dried at a peak metal temperature (PMT) of 230°C and were cooled, so as to fabricate composite resin-coated steel sheets having composite resin coating layers as Inventive Materials 1 to 22 and Comparative Materials 1 to 11.

Transparent resin coating layers (having a dried coating layer thickness of 1 µm) were formed on the composite resin coating layers of Inventive Materials 3, 8, and 13. In this case, the same composite resin composition as that of Example 2 was used as a transparent resin composition except that the transparent resin composition did not include the inorganic pigment and the metal pigment, and the transparent resin composition was sprayed onto the composition resin coating layers.

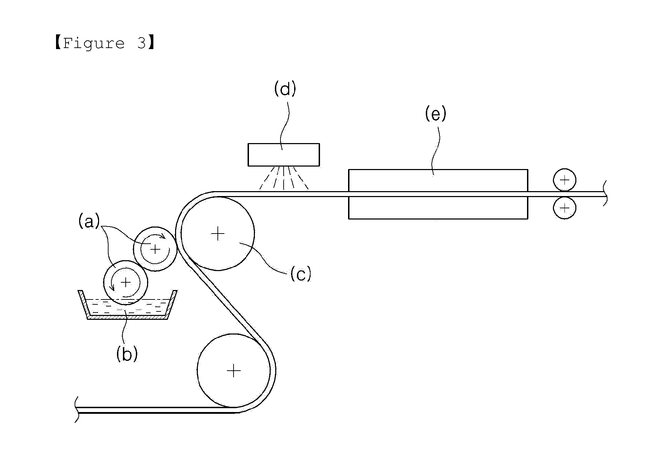

FIG. 3 schematically illustrates a process of forming a composite resin coating layer by a roll-coating method and a process of forming a transparent resin coating layer by a spray method for manufacturing a composite resin-coated steel sheet.

Surface characteristics of the composite resin-coated steel sheets having composite resin coating layers were evaluated, and results of the evaluation are shown in Table 2. The surface characteristics shown in Table 2 were evaluated as described below.

### <Coating layer thickness>

The thicknesses of the coating layers were measured using a portable non-destructive thickness gauge.

### <Appearance>

The colors, decorative effects, texture of the coating layers, particularly, the formation of patterns on the coating layers and the sizes, uniformity, and continuity of the patterns were relatively evaluated as shown below.

### [Evaluation grades]

⊚: (very good), ○: (good), -Δ: (poor), ×: (very poor)

### <Gloss>

Gloss was evaluated by measuring reflection from a 60° inclined surface using a device by the SHEEN company.

### <Pencil hardness>

The formation of scratches were observed after drawing 10 cm long lines at an angle of 45° with a load of 1000 ± 10 g using HB to 4H Mitsubishi pencils.

### <Corrosion resistance evaluation>

Corrosion resistance was evaluated by a cyclic corrosion test (CCT). A cycle, including spraying salt water (concentration: 5%, 35°C, spraying pressure: 1 kg/cm²) for 5 hours at a relative humidity of 95%, drying at a relative humidity of 30% and a temperature of 70°C for 2 hours, processing at a temperature of 50°C for 3 hours, was repeated 100 times, and then the area of red rust on each steel sheet was evaluated.

### [Evaluation grades]

⊚: corroded area ratio was 0%
○: corroded area ratio was 5% or less
Δ: corroded area ratio was 5% to 30%
×: corroded area ratio was 30% or greater

### <Bendability evaluation>

Each color coated steel sheet was extended by 10% and placed in a vise to bend the steel sheet by 180° with a force of 1 kgf and press the steel sheet until the steel sheet was flattened (OT-bending). Scotch tape was attached to a bent coating layer and separated from the bent coating layer to check whether the coating layer was also separated and whether cracks were formed in a separated surface.

### [Evaluation grades]

⊚: a coating layer was not cracked and separated
○: a coating layer was slightly cracked but not separated
-Δ: a coating layer was markedly cracked but not separated
×: a coating layer was markedly cracked and separated

### <Chemical resistance>

Gauze wetted with methyl ethyl ketone (MEK) at a load of 1 Kg was used to rub each coating layer back and forth at a force of 1 kgf, and the number of rubbings was measured when the coating layer was separated.

### [Evaluation grades]

⊚: 100 times or greater
○: 70 times to less than 100 times
Δ: 40 times to less than 70 times
×: less than 40 times

**[Table 2]**

| No. | | Composite resin coating layer | | Cr-free lower coating | Transparent resin coating layer thickness | Decorative appearance | Appearrance (pattern) | 60° gloss | Pencil hardness | Corrosion resistance | Formability | Chemical resistance |
|---|---|---|---|---|---|---|---|---|---|---|---|---|
| | | composition | thickness (µm) | | | | | | | | | |
| | 1 | | 10 | - | - | ○ | ⊚ | 15 | F | ⊚ | ⊚ | ○ |
| | 2 | Example 1 | 10 | 1 µm | - | ⊚ | ⊚ | 18 | 2H | ⊚ | ⊚ | ⊚ |
| | 3 | | 10 | 1 µm | 1 µm | ⊚ | ⊚ | 23 | 2H | ⊚ | ⊚ | ⊚ |
| | 4 | | 5 | - | - | ○ | ⊚ | 12 | 2H | ⊚ | ⊚ | ⊚ |
| | 5 | | 10 | - | - | ○ | ⊚ | 15 | 2H | ⊚ | ⊚ | ⊚ |
| | 6 | Example 2 | 15 | - | - | ○ | ⊚ | 25 | 2H | ⊚ | ⊚ | ⊚ |
| | 7 | | 10 | 1 µm | - | ⊚ | ⊚ | 28 | 2H | ⊚ | ⊚ | ⊚ |
| | 8 | | 10 | 1 µm | 1 µm | ⊚ | ⊚ | 32 | 2H | ⊚ | ⊚ | ⊚ |
| | 9 | | 5 | - | - | ○ | ⊚ | 16 | 2H | ⊚ | ⊚ | ⊚ |
| | 10 | | 10 | - | - | ○ | ⊚ | 20 | 2H | ⊚ | ⊚ | ⊚ |
| Inventive | 11 | Example 3 | 15 | - | - | ○ | ⊚ | 35 | 2H | ⊚ | ⊚ | ⊚ |
| Materials | 12 | | 10 | 1 pm | - | ⊚ | ⊚ | 35 | 2H | ⊚ | ⊚ | ⊚ |
| | 13 | | 10 | 1 µm | 1 µm | ⊚ | ⊚ | 37 | 2H | ⊚ | ⊚ | ⊚ |
| | 14 | Example 4 | 10 | - | - | ○ | ⊚ | 16 | 2H | ⊚ | ⊚ | ⊚ |
| | 15 | Example 5 | 10 | - | - | ○ | ⊚ | 15 | 2H | ⊚ | ⊚ | ⊚ |
| | 16 | Example 6 | 10 | - | - | ○ | ⊚ | 12 | 2H | ⊚ | ⊚ | ⊚ |
| | 17 | Example 7 | 10 | - | - | ○ | ⊚ | 16 | 2H | ⊚ | ⊚ | ⊚ |
| | 18 | Example 8 | 10 | - | - | ○ | ⊚ | 15 | 2H | ⊚ | ⊚ | ⊚ |
| | 19 | Example 9 | 10 | - | - | ○ | ⊚ | 16 | 2H | ⊚ | ⊚ | ⊚ |
| | 20 | Example 10 | 10 | - | - | ○ | ⊚ | 15 | 2H | ⊚ | ⊚ | ⊚ |
| | 21 | Example 11 | 10 | - | - | ○ | ⊚ | 16 | 2H | ⊚ | ⊚ | ⊚ |
| | 22 | Example 12 | 10 | - | - | ○ | ⊚ | 15 | 2H | ⊚ | ⊚ | ⊚ |
| Comparative Materials | 1 | Comparative Example 1 | 10 | - | - | ○ | ⊚ | 17 | F | ⊚ | ⊚ | Δ |
| | 2 | Comparative Example 2 | 10 | - | - | ○ | ⊚ | 14 | 2H | ⊚ | Δ | ⊚ |
| | 3 | Comparative Example 3 | 10 | - | - | ○ | ⊚ | 16 | H | ⊚ | ⊚ | Δ |
| | 4 | Comparative Example 4 | 10 | - | - | ○ | ⊚ | 12 | H | ⊚ | Δ | ⊚ |
| | 5 | Comparative Example 5 | 10 | - | - | ○ | × | 20 | F | Δ | ⊚ | ⊚ |
| | 6 | Comparative Example 6 | 10 | - | - | ○ | ○ | 15 | H | ⊚ | Δ | ○ |
| | 7 | Comparative Example 7 | 10 | - | - | ○ | ○ | 16 | H | ⊚ | ○ | Δ |
| | 8 | Comparative Example 8 | 10 | - | - | ○ | ○ | 15 | F | ⊚ | ○ | ○ |
| | 9 | Comparative Example 9 | 10 | - | - | Δ | ○ | 16 | H | ⊚ | ○ | ○ |
| | 10 | Comparative Example 10 | 10 | - | - | Δ | Δ | 15 | H | ⊚ | ○ | ○ |
| | 11 | Comparative Example 11 | 10 | - | - | Δ | Δ | 16 | H | ⊚ | ○ | ○ |

The color composite resin compositions on the inventive materials have beautiful colors and decorative effects when the dried coating layer thickness was 10 µm. Moreover, when lower coating layers were formed below the composite resin coating layers through a Cr-free lower coating process (Inventive Materials 1, 4, 5, 6, 9, 10, 14, and 15), or transparent resin coating layers were further formed above the composite resin coating layers through an additional transparent resin process (Inventive Materials 2, 3, 7, 8, 12, and 13), more beautiful colors were obtained. It is considered that these effects were obtained because the lower coating and the transparent resin increased a coating layer thickness to lead to an increase in hiding effects, a decrease in the diffuse reflection of light, and an increase in the color clarity of pigments.

Referring to Comparative Materials 1 and 2, since a urethane-modified polyester resin having a crosslinked structure has a higher degree of curing than a urethane-modified polyester resin having a linear structure, Comparative Material 2 using the urethane-modified polyester resin having a crosslinked structure had relatively high hardness and chemical resistance but had poor formability such as cracking. Results of Comparative Material 1 using the urethane-modified polyester resin having a linear structure was the opposite of the results of Comparative Material 2.

In addition, Comparative Materials 6 and 7, using the compositions of Comparative Examples 6 and 7 in which the weight ratio of the linear urethane-modified polyester resin and the crosslinked urethane-modified polyester resin was outside the range proposed in the present disclosure, had poor formability and chemical resistance.

In addition, Inventive Materials 1 to 3 using the composition of Example 1 containing the aziridine curing agent had relatively less surface hardness because of a chain alkyl group compared to the case of using a melamine curing agent having an aromatic ring, and relatively low chemical resistance. However, Inventive Materials 1 to 3 had good coating layer characteristics on the whole.

In addition, Compared to methylated melamine, imino melamine leads to a fast curing rate and thus facilitates high-speed curing, and if the content of imino melamine increases, the degree of curing increases to result in an increase in the hardness of a coating layer. Therefore, Comparative Material 4 exclusively using the imino curing agent had poor formability. On the other hand, Comparative Material 3 exclusively using the methylated melamine curing agent had high formability but low chemical resistance.

In addition, Comparative Materials 8 and 9, using the compositions of Comparative Examples 8 and 9 in which the content of the melamine curing agent was outside the range proposed in the present disclosure, had much lower formability and chemical resistance. In particularly, Comparative Material 9 having an excessively large amount of the imino melamine had poor decorative effects.

In addition, if an acid catalyst and an amine catalyst are added, concave and convex portions are formed as a pattern on a coating layer when the coating layer is dried, thereby improving the surface texture of the coating layer by the extinction effect. However, Comparative Material 5, using the composition of Comparative Example 5 not including the acid catalyst and the amine catalyst, had no pattern, low hardness, and low corrosion resistance. In addition, Comparative Materials 10 and 11, using an excessively small or large amount of a catalyst, had poor appearance characteristics.
(A) Roll Coater
(B) Solution Pan
(C) Backup Roll
(D) Spray Coater
(E) Oven

## Claims

1. A composite resin composition comprising:
30 wt% to 60 wt% of a urethane-modified polyester resin in which a linear type resin and a crosslinked type resin are mixed with each other;
3 wt% to 15 wt% of at least one of an aziridine curing agent and a melamine curing agent;
0.05 wt% to 1.5 wt% of an acid curing catalyst;
0.05 wt% to 1.5 wt% of an amine curing catalyst;
0.1 wt% to 15 wt% of a inorganic color pigment; and
a solvent as a remainder,
wherein the urethane-modified polyester resin has a weight ratio of the linear type resin and the crosslinked type resin within a range of 1:1 to 1:4, a weight-average molecular weight Mw within the range of 2,000 to 40,000, a glass transition temperature within the range of 0 to 70°C and a hydroxyl (-OH) value of 10 to 500.

2. The composite resin composition of claim 1, wherein the melamine curing agent comprises methylated melamine and imino melamine with a weight ratio of 1:1 to 1:4.

3. The composite resin composition of claim 1, wherein the acid curing catalyst comprises at least one sulfonic acid selected from the group consisting of p-toluenesulfonic acid, dodecyl benzene disulfonic acid, dinonyl toluene disulfonic acid, and dinonyl naphthalene sulfonic acid.

4. The composite resin composition of claim 1, wherein the acid curing catalyst comprises a sulfonic acid blocked with an amine-based compound.

5. The composite resin composition of claim 4, wherein the sulfonic acid blocked with the amine-based compound is an amine neutralized dodecylbenzenesulfonic acid.

6. The composite resin composition of claim 1, wherein the amine curing catalyst comprises primary amine, secondary amine, tertiary amine, or a mixture of at least two thereof.

7. The composite resin composition of claim 1, wherein the amine curing catalyst is more volatile than the acid curing catalyst.

8. The composite resin composition of claim 1, further comprising a metal pigment in an amount of 0.1 wt% to 15 wt% based on the total weight of the composite resin composition.

9. The composite resin composition of claim 1, wherein the viscosity of the composite resin composition is 20 seconds to 200 seconds of a time period required for discharging the composite resin composition from a DIN Cup (DIN, 53211).

10. A galvanized steel sheet comprising: a base steel sheet having a galvanized layer; and a composite resin coating layer formed on at least one side of the base steel sheet,
wherein the composite resin coating layer is a color composite resin coating layer comprising: 50 wt% to 80 wt% of a urethane-modified polyester resin in which a linear type resin and a crosslinked type resin are mixed with each other, 3 wt% to 20 wt% of at least one of an aziridine curing agent and a melamine curing agent, and 3 wt% to 20 wt% of a inorganic color pigment,
wherein the urethane-modified polyester resin has a weight ratio of the linear type resin and the crosslinked type resin within a range of 1:1 to 1:4, a weight-average molecular weight Mw within the range of 2,000 to 40,000, a glass transition temperature within the range of 0 to 70°C and a hydroxyl (-OH) value of 10 to 500.

11. The galvanized steel sheet of claim 10, wherein the inorganic color pigment has a particle diameter of 0.01 µm to 20 µm.

12. The galvanized steel sheet of claim 10, wherein the color composite resin coating layer further comprises a metal pigment in an amount of 0.5 wt% to 20 wt% based on the total weight of the color composite resin coating layer.

13. The galvanized steel sheet of claim 12, wherein the metal pigment has a flake shape with a thickness of 0.1 µm to 5 µm.

14. The galvanized steel sheet of claim 12, wherein the metal pigment is surface treated with at least one organic compound selected from the group consisting of a cetyl sulfate sodium salt, a cetyl sulfate ammonium salt, a stearyl sulfate sodium salt, a stearyl sulfate ammonium salt, a glycerin fatty acid ester, a polyglycerin fatty acid ester, glyceryl ricinoleate, glyceryl stearate, glyceryl rosinate, Laneth-5, Laneth-10, Laneth-15, lanolin, laurtrimonium chloride, cetrimonium bromide, cetrimonium chloride, sodium isostearoyl lactate, sorbitan laurate, sorbitan stearate, sorbitan oleate, and organic compounds having chemical formulas 1 to 5 below: 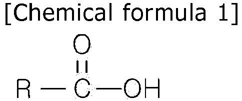 in chemical formula 1, R refers to a C5-C15 chain alkyl compound,
[Chemical formula 2] RO(CH₂CH₂O)nSO₃H
in chemical formula 2, R refers to a C1-C10 chain alkyl compound, and n refers to an integer ranging from 1 to 10, 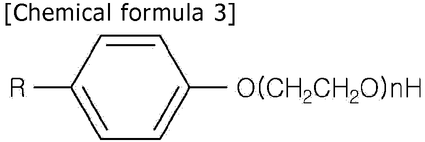 in chemical formula 3, R refers to a C1-C10 chain alkyl compound, and n refers to an integer ranging from 1 to 10,
[Chemical formula 4] RCO(CH₂CH₂O)nH
in chemical formula 4, R refers to a C1-C10 chain alkyl compound, and n refers to an integer ranging from 1 to 10, and 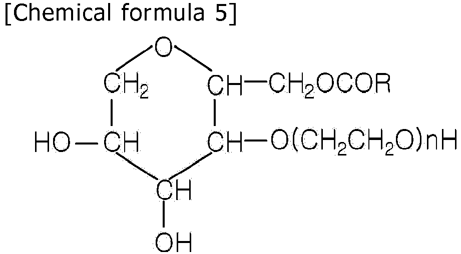 in chemical formula 5, R refers to a C1-C10 chain alkyl compound, and n refers to an integer ranging from 1 to 10.

15. The galvanized steel sheet of any one of claims 10 to 14, further comprising a transparent resin coating layer on the composite resin coating layer.

16. The galvanized steel sheet of claim 15, wherein the transparent resin coating layer comprises 65 wt% to 95 wt% of a urethane-modified polyester resin in which a linear type resin and a crosslinked type resin are mixed with each other, and 5 wt% to 35 wt% of at least one of an aziridine curing agent and a melamine curing agent.

## Patentansprüche

1. Verbundharzzusammensetzung, umfassend:
30 Gew.-% bis 60 Gew.-% eines urethanmodifizierten Polyesterharzes, in dem ein Harz des linearen Typs mit einem Harz des vernetzten Typs miteinander gemischt sind;
3 Gew.-% bis 15 Gew.-% eines Aziridinhärtungsmittels und/oder eines Melaminhärtungsmittels;
0,05 Gew.-% bis 1,5 Gew.-% eines Säurehärtungskatalysators;
0,05 Gew.-% bis 1,5 Gew.-% eines Aminhärtungskatalysators;
0,1 Gew.-% bis 15 Gew.-% eines anorganischen Farbpigments; und
ein Lösungsmittel als Rest,
wobei das urethanmodifizierte Polyesterharz ein Gewichtsverhältnis des Harzes des linearen Typs und des Harzes des vernetzten Typs in einem Bereich von 1:1 bis 1:4, ein gewichtsmittleres Molekulargewicht Mw im Bereich von 2.000 bis 40.000, eine Glasübergangstemperatur im Bereich von 0 bis 70°C und einen Hydroxyl-(-OH)-Wert von 10 bis 500 hat.

2. Verbundharzzusammensetzung nach Anspruch 1, wobei das Melaminhärtungsmittel methyliertes Melamin und Iminomelamin mit einem Gewichtsverhältnis von 1:1 bis 1:4 umfasst.

3. Verbundharzzusammensetzung nach Anspruch 1, wobei der Säurehärtungskatalysator mindestens eine Sulfonsäure umfasst, die aus der Gruppe ausgewählt ist, die aus p-Toluolsulfonsäure, Dodecylbenzoldisulfonsäure, Dinonyltoluoldisulfonsäure und Dinonylnaphthalinsulfonsäure besteht.

4. Verbundharzzusammensetzung nach Anspruch 1, wobei der Säurehärtungskatalysator eine Sulfonsäure umfasst, die mit einer aminbasierten Verbindung blockiert ist.

5. Verbundharzzusammensetzung nach Anspruch 4, wobei es sich bei der mit der aminbasierten Verbindung blockierten Sulfonsäure um eine aminneutralisierte Dodecylbenzolsulfonsäure handelt.

6. Verbundharzzusammensetzung nach Anspruch 1, wobei der Aminhärtungskatalysator primäres Amin, sekundäres Amin, tertiäres Amin oder ein Gemisch aus mindestens zweien von diesen umfasst.

7. Verbundharzzusammensetzung nach Anspruch 1, wobei der Aminhärtungskatalysator flüchtiger ist als der Säurehärtungskatalysator.

8. Verbundharzzusammensetzung nach Anspruch 1, darüber hinaus ein Metallpigment in einer Menge von 0,1 Gew.-% bis 15 Gew.-% auf Basis des Gesamtgewichts der Verbundharzzusammensetzung umfassend.

9. Verbundharzzusammensetzung nach Anspruch 1, wobei die Viskosität der Verbundharzzusammensetzung 20 Sekunden bis 200 Sekunden einer Zeitdauer beträgt, die zum Entleeren der Verbundharzzusammensetzung aus einem DIN-Becher (DIN, 53211) erforderlich ist.

10. Galvanisiertes Stahlblech, umfassend: ein Grundstahlblech mit einer galvanisierten Schicht; und eine Verbundharzdeckschicht, die auf mindestens einer Seite des Grundstahlblechs ausgebildet ist,
wobei es sich bei der Verbundharzdeckschicht um eine Farbverbundharzdeckschicht handelt, die umfasst: 50 Gew.-% bis 80 Gew.-% eines urethanmodifizierten Polyesterharzes, in dem ein Harz des linearen Typs mit einem Harz des vernetzten Typs miteinander gemischt sind, 3 Gew.-% bis 20 Gew.-% eines Aziridinhärtungsmittels und/oder eines Melaminhärtungsmittels, und 3 Gew.-% bis 20 Gew.-% eines anorganischen Farbpigments,
wobei das urethanmodifizierte Polyesterharz ein Gewichtsverhältnis des Harzes des linearen Typs und des Harzes des vernetzten Typs in einem Bereich von 1:1 bis 1:4, ein gewichtsmittleres Molekulargewicht Mw im Bereich von 2.000 bis 40.000, eine Glasübergangstemperatur im Bereich von 0 bis 70°C und einen Hydroxyl-(-OH)-Wert von 10 bis 500 hat.

11. Galvanisiertes Stahlblech nach Anspruch 10, wobei das anorganische Farbpigment einen Partikeldurchmesser von 0,01 µm bis 20 µm hat.

12. Galvanisiertes Stahlblech nach Anspruch 10, wobei die Farbverbundharzdeckschicht darüber hinaus ein Metallpigment in einer Menge von 0,5 Gew.-% bis 20 Gew.-% auf Basis des Gesamtgewichts der Farbverbundharzdeckschicht umfasst.

13. Galvanisiertes Stahlblech nach Anspruch 12, wobei das Metallpigment eine Flockenform mit einer Dicke von 0,1 µm bis 5 µm hat.

14. Galvanisiertes Stahlblech nach Anspruch 12, wobei das Metallpigment mit mindestens einer organischen Verbindung oberflächenbehandelt ist, die aus der Gruppe ausgewählt ist, die aus einem Cetylsulfatnatriumsalz, einem Cetylsulfatammoniumsalz, einem Stearylsulfatnatriumsalz, einem Stearylsulfatammoniumsalz, einem Glycerinfettsäureester, einem Polyglycerinfettsäureester, Glycerylricinoleat, Glycerylstearat, Glycerylrosinat, Laneth-5, Laneth-10, Laneth-15, Lanolin, Laurtrimoniumchlorid, Cetrimoniumbromid, Cetrimoniumchlorid, Natriumisostearoyllactat, Sorbitanlaurat, Sorbitanstearat, Sorbitanoleat und organischen Verbindungen mit den nachstehenden chemischen Formeln 1 bis 5 besteht: 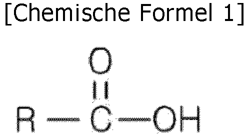 in der chemischen Formel 1 bezieht sich R auf eine C5-C15-kettige Alkylverbindung,
[Chemische Formel 2] RO(CH₂CH₂O)nSO₃H
in der chemischen Formel 2 bezieht sich R auf eine C1-C10-kettige Alkylverbindung, und n bezieht sich auf eine ganze Zahl, die von 1 bis 10 reicht, 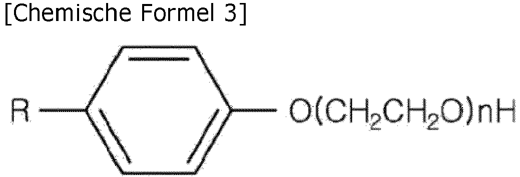 in der chemischen Formel 3 bezieht sich R auf eine C1-C10-kettige Alkylverbindung, und n bezieht sich auf eine ganze Zahl, die von 1 bis 10 reicht,
[Chemische Formel 4] RCO(CH₂CH₂O)nH
in der chemischen Formel 4 bezieht sich R auf eine C1-C10-kettige Alkylverbindung, und n bezieht sich auf eine ganze Zahl, die von 1 bis 10 reicht, und 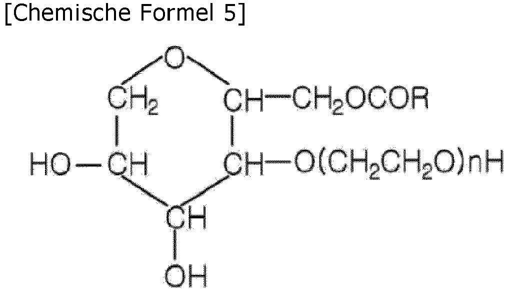 in der chemischen Formel 5 bezieht sich R auf eine C1-C10-kettige Alkylverbindung, und n bezieht sich auf eine ganze Zahl, die von 1 bis 10 reicht.

15. Galvanisiertes Stahlblech nach einem der Ansprüche 10 bis 14, darüber hinaus eine transparente Harzdeckschicht auf der Verbundharzdeckschicht umfassend.

16. Galvanisiertes Stahlblech nach Anspruch 15, wobei die transparente Harzdeckschicht 65 Gew.-% bis 95 Gew.-% eines urethanmodifizierten Polyesterharzes, in dem ein Harz des linearen Typs mit einem Harz des vernetzten Typs miteinander gemischt sind, und 5 Gew.-% bis 35 Gew.-% eines Aziridinhärtungsmittels und/oder Melaminhärtungsmittels umfasst.

## Revendications

1. Composition de résine composite comprenant :
30 % en poids à 60 % en poids d'une résine de polyester modifiée par de l'uréthane dans laquelle une résine de type linéaire et une résine de type réticulé sont mélangées l'une avec l'autre ;
3 % en poids à 15 % en poids d'au moins l'un d'un agent de durcissement de type aziridine et d'un agent de durcissement sur la base de mélamine ;
0,05 % en poids à 1,5 % en poids d'un catalyseur de durcissement sur la base d'un acide ;
0,05 % en poids à 1,5 % en poids d'un catalyseur de durcissement sur la base d'amine ;
0,1 % en poids à 15 % en poids d'un pigment de couleur inorganique ; et
un solvant comme solde,
sachant que la résine de polyester modifiée par de l'uréthane présente un rapport de poids de la résine de type linéaire et de la résine de type réticulé compris dans une plage de 1:1 à 1:4, un poids moléculaire moyen pondéral Mw compris dans la plage de 2 000 à 40 000, une température de transition de verre comprise dans la plage de 0 à 70 °C et une valeur d'hydroxyle (-OH) de 10 à 500.

2. La composition de résine composite de la revendication 1, sachant que l'agent de durcissement sur la base de mélamine comprend de la mélamine méthylée et de l'imino-mélamine avec un rapport de poids de 1:1 à 1:4.

3. La composition de résine composite de la revendication 1, sachant que le catalyseur de durcissement sur la base d'un acide comprend au moins un acide sulfonique sélectionné dans le groupe constitué par l'acide p-toluènesulfonique, l'acide disulfonique de dodécylbenzène, l'acide disulfonique de dinonyltoluène, et l'acide sulfonique de dinonylnaphtalène.

4. La composition de résine composite de la revendication 1, sachant que le catalyseur de durcissement sur la base d'un acide comprend un acide sulfonique bloqué avec un composé à base d'amine.

5. La composition de résine composite de la revendication 4, sachant que l'acide sulfonique bloqué avec le composé à base d'amine est un acide sulfonique de dodécylbenzènes neutralisé par de l'amine.

6. La composition de résine composite de la revendication 1, sachant que le catalyseur de durcissement de type amine comprend une amine primaire, une amine secondaire, une amine tertiaire, ou un mélange d'au moins deux de celles-ci.

7. La composition de résine composite de la revendication 1, sachant que le catalyseur de durcissement de type amine est plus volatile que le catalyseur de durcissement sur la base d'un acide.

8. La composition de résine composite de la revendication 1, comprenant en outre un pigment de métal dans une quantité de 0,1 % en poids à 15 % en poids sur la base du poids total de la composition de résine composite.

9. La composition de résine composite de la revendication 1, sachant que la viscosité de la composition de résine composite est de 20 secondes à 200 secondes d'une période de temps requise pour évacuer la composition de résine composite d'une coupe DIN (DIN, 53211).

10. Tôle d'acier galvanisée comprenant : une tôle d'acier de base présentant une couche galvanisée ; et une couche de revêtement de résine composite formée sur au moins un côté de la tôle d'acier de base,
sachant que la couche de revêtement de résine composite est une couche de revêtement de résine composite colorée comprenant : 50 % en poids à 80 % de poids de résine de polyester modifiée par de l'uréthane dans laquelle une résine de type linéaire et une résine de type réticulé sont mélangées l'une avec l'autre, 3 % en poids à 20 % en poids d'au moins l'un d'un agent de durcissement de type aziridine et d'un agent de durcissement sur la base de mélamine, et 3 % en poids à 20 % en poids d'un pigment de couleur inorganique,
sachant que la résine de polyester modifiée par de l'uréthane présente un rapport de poids de la résine de type linéaire et de la résine de type réticulé compris dans une plage de 1:1 à 1:4, un poids moléculaire moyen pondéral Mw compris dans la plage de 2 000 à 40 000, une température de transition de verre comprise dans la plage de 0 à 70 °C et une valeur d'hydroxyle (-OH) de 10 à 500.

11. La tôle d'acier galvanisée de la revendication 10, sachant que le pigment de couleur inorganique a un diamètre de particule de 0,01 µm à 20 µm.

12. La tôle d'acier galvanisée de la revendication 10, sachant que la couche de revêtement de résine composite colorée comprend un pigment de métal dans une quantité de 0,5 % en poids à 20 % en poids sur la base du poids total de la couche de revêtement de résine composite de couleur.

13. La tôle d'acier galvanisée de la revendication 12, sachant que le pigment de métal a une forme de flocon d'une épaisseur de 0,1 µm à 5 µm.

14. La tôle d'acier galvanisée de la revendication 12, sachant que le pigment de métal est traité en surface avec au moins un composé organique sélectionné dans le groupe constitué par un sel de sodium de cétylsulfate, un sel d'ammonium de cétylsulfate, un sel de sodium de stéarylsulfate, un sel d'ammonium de stéarylsulfate, un ester d'acide gras de glycérine, un ester d'acide gras de polyglycérine, un ricinoléate de glycéryle, un stéarate de glycéryle, un rosinate de glycéryle, Laneth-5, Laneth-10, Laneth-15, un lanoline, un chlorure de laurtrimonium, un bromure de cétrimonium, un chlorure de cétrimonium, un lactate d'isostéaroyle de sodium, un laurate de sorbitane, un stéarate de sorbitane, un oléate de sorbitane, et des composés organiques ayant des formules chimiques 1 à 5 ci-dessous : 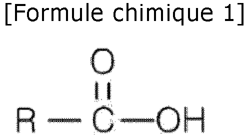 dans la formule chimique 1, R se rapporte à un composé alkyle de chaîne C5-C15,
[Formule chimique 2] RO(CH₂CH₂O)nSO₃H
dans la formule chimique 2, R se rapporte à un composé alkyle de chaîne C1-C10 et n se rapporte à un entier de 1 à 10, 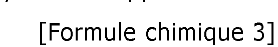 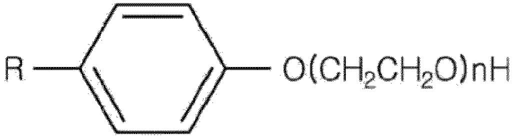 dans la formule chimique 3, R se rapporte à un composé alkyle de chaîne C1-C10, et n se rapporte à un entier de 1 à 10,
[Formule chimique 4] RCO(CH₂CH₂O)nH
dans la formule chimique 4, R se rapporte à un composé alkyle de chaîne C1-C10, et n se rapporte à un entier de 1 à 10, et 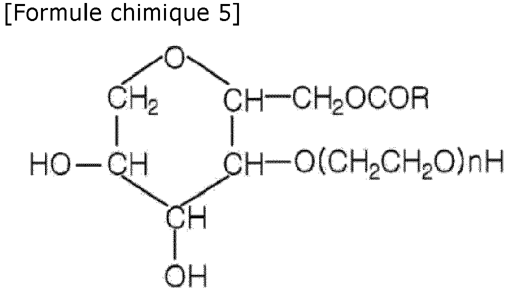 dans la formule chimique 5, R se rapporte à un composé alkyle de chaîne C1-C10, et n se rapporte à un entier de 1 à 10.

15. La tôle d'acier galvanisée de l'une quelconque des revendications 10 à 14, comprenant en outre une couche de revêtement de résine transparente sur la couche de revêtement de résine composite.

16. La tôle d'acier galvanisée de la revendication 15, sachant que la couche de revêtement de résine transparente comprend 65 % en poids à 95 % en poids d'une résine de polyester modifiée par de l'uréthane dans laquelle une résine de type linéaire et une résine de type réticulé sont mélangées l'une avec l'autre, et 5 % en poids à 35 % en poids d'au moins l'un d'un agent de durcissement de type aziridine et d'un agent de durcissement sur la base de mélamine.
